Europäisches Patentamt

European Patent Office

Office européen des brevets

(19)

(11) Veröffentlichungsnummer : **0 074 026**
**B1**

(12) **EUROPÄISCHE PATENTSCHRIFT**

(45) Veröffentlichungstag der Patentschrift :
30.01.85

(51) Int. Cl.⁴ : **A 24 F 19/00, B 60 N 3/08**

(21) Anmeldenummer : **82107837.5**

(22) Anmeldetag : **26.08.82**

(54) **Ascher für Fahrzeuge.**

(30) Priorität : **05.09.81 DE 3135314**

(43) Veröffentlichungstag der Anmeldung :
**16.03.83 Patentblatt 83/11**

(45) Bekanntmachung des Hinweises auf die Patenterteilung : **30.01.85 Patentblatt 85/05**

(84) Benannte Vertragsstaaten :
**BE DE FR GB IT NL SE**

(56) Entgegenhaltungen :
**DE-A- 1 950 168**
**DE-U- 1 928 780**
**US-A- 2 325 721**

(73) Patentinhaber : **Gebr. Happich GmbH
Postfach 10 02 49 Clausenbrücke 1
D-5600 Wuppertal 1 (DE)**

(72) Erfinder : **Dabringhaus, Volker
Erkrather Strasse 63
D-5600 Wuppertal 11 (DE)**
Erfinder : **Simoleit, Horst
Dönbergstrasse 2
D-5620 Velbert 15 (DE)**

## Beschreibung

Die Erfindung bezieht sich auf einen Ascher der im Oberbegriff des Anspruchs 1 angegebenen Art.

Bei einem bekannten Ascher nach der DE-U-1 928 780 weist der Schiebedeckel eine Größe auf, die kleiner als die halbe Flächenerstreckung des Aschertopfes ist. Demgemäß ist die Einwurföffnung des Aschertopfes wesentlich kleiner als die Größe des Aschertopfes. Ein behinderungsfreies Einwerfen von Asche, Zigarettenresten und dergleichen in den Aschertopf ist verständlicherweise von der Größe der Einwurföffnung abhängig. Um bei dem bekannten Ascher eine genügend große Einwurföffnung zu erzielen, ist es erforlich, den Aschertopf relativ groß zu dimensionieren, was aber seine Herstellung verteuert und Einbauprobleme bei engen räumlichen Verhältnissen verursachen kann.

Ein in bezug auf die Größe der Einwurföffnung verbesserter Ascher der gattungsgemäßen Art ist in der US-A-2 325 721 gezeigt. Dieser bekannte Ascher besteht aus einem Aschergehäuse mit Führungsnuten in Seitenschienen zur Aufnahme des Schiebedeckels, wobei die Führungsnuten sich bis zum Endbereich einer zur Aufnahme des Schiebedeckels dienenden rückseitigen Verlängerung des Aschergehäuses erstrecken und als kurvenförmige Kulissenbahnen ausgebildet sind, wobei der Schiebedeckel seitlich vorstehend angeordnete Kanten aufweist und wobei an dem Schiebedeckel sich auf der unteren Wandung der Führungsnuten abstützende Federn angeordnet sind. Dieser bekannte Ascher weist nachteiligerweise einen aus vielen Einzelteilen zusammengesetzten komplizierten Aufbau auf.

Aufgabe der Erfindung ist es nun, einen Ascher zu schaffen, der aus nur wenigen Einzelteilen besteht und unter Berücksichtigung gestellter Einbauprobleme versenkt angeordnet werden kann, der bei kompakter Bauweise eine relativ große Einwurföffnung aufweist, und dessen Schiebedeckel eine klapperfreie Führung aufweisen soll.

Die zur Lösung dieser Aufgabe erfindungsgemäß vorgesehenen Gestaltungsmerkmale sind im kennzeichnenden Teil des Anspruchs 1 angegeben.

Bei dem erfindungsgemäßen Ascher ist zunächst der Vorteil gegeben, daß die Einwurföffnung eine der Aschertopföffnung entsprechende Größe besitzt, weil durch die Verlängerung des Aschergehäuses eine entsprechend weite Verschiebbarkeit des Schiebedeckels gegeben ist. Die Verlängerung des Aschergehäuses dient ausschließlich der Führung des Schiebedeckels nebst der daran angeordneten Feder, so daß die Abmessungen der Verlängerung in material- und platzsparender Weise an die des Schiebedeckels angepaßt werden können. Die besondere Ausbildung der Führungsnuten als kurvenförmige Kulissenbahnen ermöglichen es, in Verbindung mit der besonderen Anordnung der Führungsnocken, den Schiebedeckel um Hindernisse gewissermaßen herumzulenken. Die Feder nebst der ihr zugeordneten Führungsbahn gewährleistet schließlich eine klapperfreie Anordnung des Schiebedeckels.

Der erfindungsgemäße Ascher ist insbesondere geeignet, im Winkelbereich einer Konsole, deren erster Bereich etwa senkrecht unterhalb einer Instrumententafel eines Fahrzeuges angeordnet ist und deren zweiter Bereich leicht abfallend in den Fahrgastraum vorgezogen ist, versenkt angeordnet zu werden. Der Hauptteil des Aschergehäuses sitz dann in einer Ausnehmung des in den Fahrgastraum vorgezogenen Konsolenbereiches, während die Verlängerung eine Öffnung im senkrecht ausgerichteten Konsolenbereich durchsetzt. Da in dem senkrechten Konsolenbereich oftmals Einbauteile, z. B. ein Radio, angeordnet sind, ist es von Vorteil, wenn die Maßnahme nach Anspruch 2 vorgesehen wird, die es nämlich erlaubt, die Verlängerung in einen stumpfen Winkel zum Aschergehäuse auszurichten. Dadurch kann die Verlängerung in dem freien Konsolenbereich angeordnet werden und der Schiebedeckel kann zwangsgeführt so umgelenkt werden, daß er praktisch beim Verschieben unter dem Hindernis, wie Radio od. dgl., hinwegtaucht.

Zusätzlich zu der auf der Federführungsbahn der Verlängerung gleitenden Feder bietet die Maßnahme nach Anspruch 3 die Sicherheit, daß der Schiebedeckel sowohl in seiner Schließ — als auch in seiner Offenlage und gegebenenfalls auch in Zwischenlagen zuverlässig arretiert ist.

Die Ausgestaltung der Erfindung nach Anspruch 4 ermöglicht eine einfache Montage des Schiebedeckels durch Einstecken von oben in das Aschergehäuse, wobei die Stege beim Einstecken zunächst zurückweichen, um dann die Führungsnocken federelastisch in die Führungsnuten einrasten zu lassen.

Die Maßnahme nach Anspruch 5 ermöglicht einen gewissen Toleranzausgleich und unterstützt die zur klapperfreien Anordnung und Führung des Schiebedeckels vorgesehene Feder.

Eine einfache und kostengünstige Herstellbarkeit des Aschers wird schließlich durch die Maßnahme nach Anspruch 6 erreicht.

Ein Ausführungsbeispiel der Erfindung wird nachfolgend anhand der Zeichnung näher erläutert. Es zeigen

Figur 1 einen senkrechten Schnitt durch den Ascher gemäß der Linie I-I in Fig. 2 und

Figur 2 einen Schnitt II-II nach Fig. 1.

Der Ascher besteht in seinem grundsätzlichen Aufbau aus einem Aschergehäuse 1 aus Kunststoff mit einer rückseitig daran einstückig und materialeinheitlich angeformten Verlängerung 2, einem Schiebedeckel 3 und einem in dem Aschergehäuse 1 herausnehmbar angeordneten Aschertopf 4.

Das Aschergehäuse 1 ist in einer Aufnahmeöffnung eines leicht abfallend verlaufenden, lediglich strichpunktiert angedeuteten Konsolenbereiches 5 angeordnet und zur Befestigung mit Rasthaken 6 an den Längsseiten 7 ausgebildet. Die Längskanten 7 springen im oberen Bereich stufenförmig nach außen zurück und weisen jeweils im Übergangsbereich des Stufensprungs eine Führungsnut 8 auf, die sich bis etwa zum freien Ende der Verlängerung 2 fortsetzt. Die Führungsnuten 8 bilden jeweils kurvenförmige, im Ausführungsbeispiel sinuskurvenförmige Kulissenbahnen für die entsprechende Führung des Schiebedeckels 3.

Die der Länge des Schiebedeckels 3 angepaßte Verlängerung 2 durchsetzt eine Öffnung 9 des lediglich strichpunktiert angedeuteten senkrechten Konsolenbereichs 10. Die Verlängerung 2 weist außer den bereits erwähnten Führungsnuten 8 eine vorzugsweise mittig angeordnete Federführungsbahn 11 auf, über die eine am hinteren Bereich des Schiebedeckels 3 angeordnete Feder 12 bei der Deckelverschiebung gleitet. Am Anfang der Federführungsbahn 11 ist ein im einzelnen nicht dargestellter Nocken ausgebildet. Nocken und Anlaufschräge 13 bilden Endrastungen für den Schiebedeckel 3.

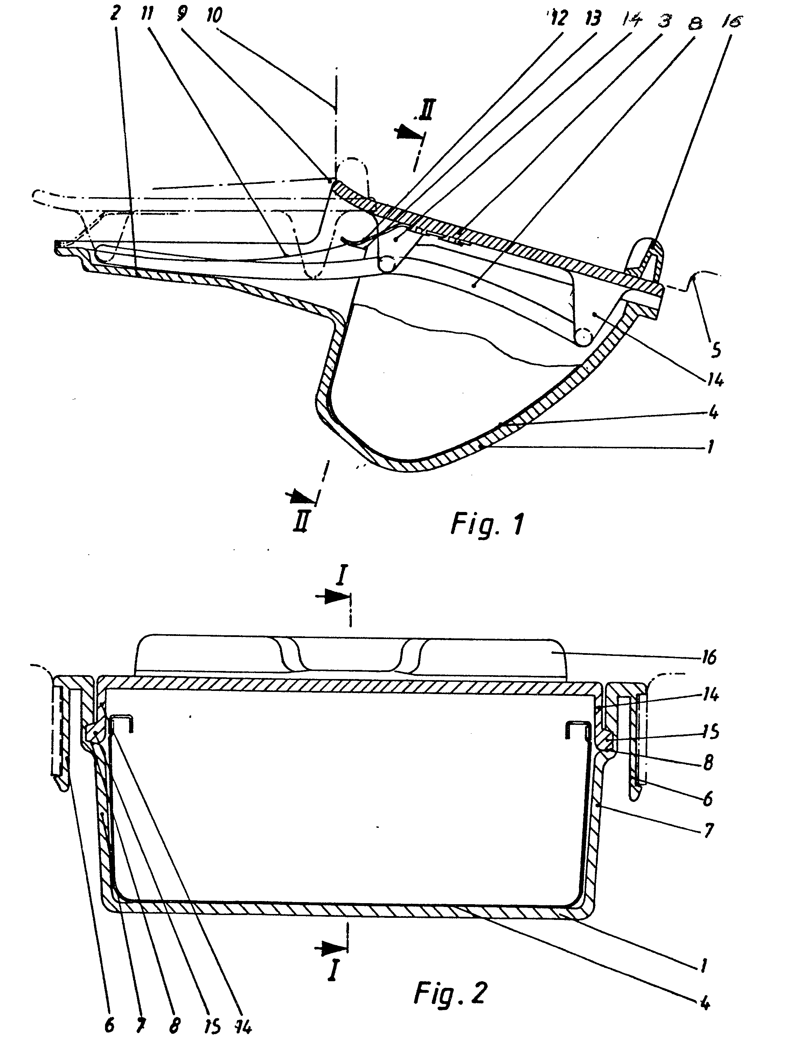

Der Schiebedeckel 3 weist eine der Öffnungsweite des Aschertopfes 4 entsprechende Flächengröße auf, so daß bei zurückgeschobenem Schiebedeckel 3, die gesamte Öffnungsweite des Aschertopfes 4 als Einwurföffnung zur Verfügung steht. Der Schiebedeckel 3 weist an seinen Längskanten, und zwar im vorderen und hinteren Endbereich, senkrecht abgewinkelt angeformte Stege 14 auf, an deren freien Endbereichen jeweils ein Führungsnocken 15 angeformt ist. Die Führungsnocken 15 besitzen ebenso wie die Führungsnuten 8 einen trapezförmigen Querschnitt und die Länge der Führungsnocken 15 ist größer als die Tiefe der Führungsnuten 8, so daß sich unter Ausnutzung der den Stegen 14 innewohnenden Federelastizität ein Toleranzausgleich ergibt. Weiterhin ist der Schiebedeckel im vorderen Bereich mit einer Handhabe 16 versehen und im hinteren Bereich nach oben hin leicht abgebogen ausgebildet, so daß die Öffnung 9 weitgehend verschlossen ist. Die Öffnung 9 ist durch die Handhabe 16 auch dann weitgehend verschlossen, wenn sich der Schiebedeckel in seiner offenen, also in der Verlängerung 2 befindlichen Lage befindet. In Fig. 1 ist mit strichpunktierten Linien die offene Lage des Schiebedeckels 3 dargestellt.

Bei der Feder 12 handelt es sich zweckmäßigerweise um eine zick-zack-förmig gebogene Blattfeder, die mit einem Schenkel am Schiebedeckel 3 festgelegt ist und sich mit dem freien Schenkel auf der Federführungsbahn 11 abstützt. Der kurvenförmige Verlauf der Federführungsbahn 11 ist weitgehend der Bewegungsbahn, die der Schiebedeckel 3 durchläuft, angepaßt.

## Ansprüche

1. Ascher für Fahrzeuge, bestehend aus einem Aschergehäuse (1) mit seitlichen Führungsnuten (8) zur Aufnahme eines Schiebedeckels (3), wobei die Führungsnuten (8) sich bis zum Endbereich einer zur Aufnahme des Schiebedeckels (3) dienenden rückseitigen Verlängerung (2) des Aschergehäuses (1) erstrecken und als kurvenförmige Kulissenbahnen ausgebildet sind und wobei der Schiebedeckel (3) durch eine federnde Abstützung klapperfrei in den Führungsnuten (8) verschiebbar geführt ist, dadurch gekennzeichnet, daß die Führungsnuten (8) in den Seitenwandungen (7) des Aschergehäuses (1) ausgeführt sind, daß als Führung des Schiebedeckels (3) an seinem vorderen und hinteren Endbereich jeweils in die Führungsnuten (8) eingreifende Führungsnocken (15) vorgesehen sind, und daß an dem der Verlängerung zugewandten hinteren Endbereich des Schiebedeckels eine sich mit ihrem freien Ende auf einer an der Verlängerung (2) ausgebildeten Federführungsbahn (11) abstützende Feder (12) angeordnet ist.

2. Ascher nach Anspruch 1, dadurch gekennzeichnet, daß die Kulissenbahn einen etwa sinuskurvenförmigen Verlauf aufweist.

3. Ascher nach Anspruch 1 oder 2, dadurch gekennzeichnet, daß die Federführungsbahn (11) zumindest an ihren Enden durch Nocken, Anlaufschrägen (13) od. dgl. gebildete Endrastungen aufweist.

4. Ascher nach einem oder mehreren der Ansprüche 1 bis 3, dadurch gekennzeichnet, daß die Führungsnocken (15) an den freien Enden von etwa senkrecht abgewinkelt an den Seitenkanten des Schiebedeckels (3) angeformten Stegen (14) angeordnet sind.

5. Ascher nach einem oder mehreren der Ansprüche 1 bis 4, dadurch gekennzeichnet, daß die Führungsnuten (8) und die Führungsnocken (15) im Querschnitt gesehen, eine einander angepaßte trapezförmige Ausbildung aufweisen und daß die Länge der Führungsnocken (15) größer als die Tiefe der Führungsnuten (8) ist.

6. Ascher nach einem oder mehreren der Ansprüche 1 bis 5, dadurch gekennzeichnet, daß der Schiebedeckel (3) ebenso wie das Aschergehäuse (1) einschließlich seiner Verlängerung (2) als Kunststoff-Spritzgußteil ausgebildet ist.

## Claims

1. An ash-tray for a vehicle, the ash-tray comprising a casing (1) having lateral guide grooves (8) arranged to hold a slidable lid (3) and extending to the end portion of a rearwardly directed extension (2) of the casing (1), in which the extension (2) serves to accommodate the slidable lid (3), in which the guide grooves (8) are constructed as curved cullis tracks, and in which a resilient support is provided by means of which the lid (3) is slidably and in rattleproof fashion guided in the guide grooves (8), characterized in that the guide grooves (8) are disposed in the lateral walls (7) of the casing (1), that for the purpose of guiding the slidable lid (3) its front end portion and rear end portion are provided with guide dogs (15) each of which engages a respective one of the guide grooves (8), in that a spring (12) is arranged on the slidable lid's rear end portion facing the rearwardly directed extension (2), and in that the free end portion of the spring is supported on a spring guideway (11) formed on said rearwardly directed extension (2).

2. An ash-tray according to claim 1, characterized in that the curvature of each of the cullis tracks is substantially sinusoidal.

3. An ash-tray according to claim 1 or claim 2, characterized in that at least the ends of the spring guideway (11) are provided with end catches in the form of dogs, upward slopes (13) or the like.

4. An ash-tray according to any one or more of the claims 1 to 3, characterized in that the guide dogs (15) are arranged on the free end portions of webs (14) integrally formed with the slidable lid's (3) lateral edges and extending substantially perpendicularly therefrom.

5. An ash-tray according to any one or more of the claims 1 to 4, characterized in that the guide grooves (8) and guide dogs (15) are, cross-sectionally, of a matching trapezoidal shape, and in that the length of the guide dogs (15) is greater than the depth of the guide grooves (8).

6. An ash-tray according to any one or more of the claims 1 to 5, characterized in that the slidable lid (3) and the casing (1) including its extension (2) are injection-moulded plastics components.

## Revendications

1. Cendrier pour véhicule automobile, constitué par un boîtier (1) à rainures de guidage latérales (8) destinées à la réception d'un couvercle coulissant (3), les rainures de guidage (8) s'étendant jusqu'à la région d'extrémité d'un prolongement arrière (2) du boîtier (1) du cendrier servant à la réception du couvercle coulissant (3) et étant constituées sous forme de voies de coulissement courbes, et le couvercle coulissant (3) étant guidé de façon précise et sans battement dans les rainures de guidage (8) par un appui élastique, caractérisé en ce que les rainures de guidage (8) sont constituées dans les parois latérales (7) du boîtier (1) du cendrier, en ce que l'on prévoit pour le guidage du couvercle coulissant (3) des saillies de guidage (15) dans ses parties d'extrémité avant et arrière pénétrant respectivement dans les rainures de guidage (8) et en ce qu'un ressort (12) s'appuyant par son extrémité libre sur une voie de guidage (11) constituée dans le prolongement (2) est monté dans la région d'extrémité arrière du couvercle coulissant qui est tournée vers le prolongement.

2. Cendrier selon la revendication 1, caractérisé en ce que la voie de coulissement a une forme qui est sensiblement celle d'une courbe sinusoïdale.

3. Cendrier selon la revendication 1 ou 2, caractérisé en ce que la voie de guidage (11) du ressort comprend, du moins à ses extrémités, des moyens d'arrêt d'extrémité constitués par des saillies, des parties obliques (13) ou analogues.

4. Cendrier selon l'une ou plusieurs des revendications 1 à 3, caractérisé en ce que les saillies de guidage (15) sont disposées aux extrémités libres de branches (14) repliées sensiblement verticalement et formées sur les bords latéraux du couvercle coulissant (3).

5. Cendrier selon l'une ou plusieurs des revendications 1 à 4, caractérisé en ce que les rainures de guidage (8) et les saillies de guidage (15) présentent, vues en coupe, une forme trapézoïdale et adaptées l'une à l'autre, et en ce que la longueur des saillies de guidage (15) est supérieure à la profondeur des rainures de guidage (8).

6. Cendrier selon l'une ou plusieurs des revendications 1 à 5, caractérisé en ce que le couvercle coulissant (3) est constitué, comme le boîtier (1) du cendrier, et y compris son prolongement (2), sous forme d'une pièce en matière synthétique moulée par injection.

0 074 026

Fig. 1

Fig. 2